Europäisches Patentamt

**European Patent Office**

Office européen des brevets

(11) Veröffentlichungsnummer: **0 031 090**

A1

## (12) EUROPÄISCHE PATENTANMELDUNG

(21) Anmeldenummer: 80107822.1

(22) Anmeldetag: 11.12.80

(51) Int. Cl.³: **A 23 L 1/31**
**A 23 L 1/315, A 23 B 4/04**

(30) Priorität: 20.12.79 DE 7935910 U
12.11.80 DE 3042698

(43) Veröffentlichungstag der Anmeldung:
01.07.81 Patentblatt 81/26

(84) Benannte Vertragsstaaten:
AT BE CH DE FR GB IT LI LU NL SE

(71) Anmelder: **TRAMP Fleischerzeugnisse GmbH & Co
Kommanditgesellschaft Produkte für Menschen
unterwegs
Westerholter Strasse 750-770
D-4352 Herten(DE)**

(72) Erfinder: **Wellhäuser, Robert, Dr.
Puchheimerstrasse 24
D-8060 Dachau(DE)**

(72) Erfinder: **Gehra, Hartmut, Dr.
am Oberfeld 4
D-8080 Fürstenfeldbruck(DE)**

(72) Erfinder: **Pfeiffer, Gottfried, Dr.
Hufeisenstrasse 13
D-8051 Eching(DE)**

(74) Vertreter: **Hansen, Bernd, Dr.rer.nat. et al,
Hoffmann . Eitle & Partner Patentanwälte
Arabellastrasse 4
D-8000 München 81(DE)**

(54) Getrocknetes Nahrungsmittel auf Fleischbasis und Verfahren zu dessen Herstellung.

(57) Ein getrocknetes Nahrungsmittel auf Fleischbasis, das aus stückigen Fleischteilen gebildet und zu einem dichten, plattenartigen Verbund bestimmter Dimensionierung ausgeformt ist. Es besitzt das Aussehen gewachsenen, rohen, getrockneten Fleisches und kann durch Zerkleinern von rohem Fleisch, Ausformung bzw. Extrudierung des Fleisches, Garen und Trocknung hergestellt werden.

EP 0 031 090 A1

Getrocknetes Nahrungsmittel auf Fleischbasis und
Verfahren zu dessen Herstellung.

Die Erfindung betrifft ein getrocknetes Nahrungsmittel auf Fleischbasis, insbesondere aus Rindfleisch, erhältlich durch Zerkleinern von rohem Fleisch, Ausformung des Fleisches, Garen und Trocknen und ein Verfahren zu dessen Herstellung.

Fleisch- und Wurstprodukte unterschiedlichsten Typus stehen heute dem Verbraucher zur Verfügung. Die überwiegend aus Fleisch bestehenden Produkte werden auf unterschiedlichste Weise vom Schlachter bzw. der Hausfrau geschaffen. Fleischprodukte werden zum Teil in Form von Braten oder anderen grossen Stücken, aber auch in abgeteilter Form, z.B. als Kotelett, Schnitzel, etc., offeriert. Das Angebot umfasst auch Fleisch, das in roh belassener Form konditioniert worden ist, wobei die Art der Bearbeitung nach regionaler Geschmacksempfindung schwanken kann, z.B. bei Räucherschinken, Bündner-Fleisch, etc.. Schliesslich wird Fleisch auch in fein zerteilter Form, z.B. geschnetzelt oder gewolft, zur Herstellung typischer Gerichte, wie Kalbsgeschnetzeltes, Frikadellen, Gulasch, etc. angeboten.

Es sind auch sogenannte "beef jerkys" bekannt, die durch eine spezielle Pökelungsbehandlung geschnittener Rindfleischstücke und eine Garung und Räucherung der geschnittenen Einzelscheiben hergestellt werden. Diese Produkte sind häufig mit einer Würzschicht überzogen, die den Eindruck natürlich gewachsenen Fleisches verhindert. Nach Angaben von Herstellern von "beef jerkys" ist die Einstellung einer gleichbleibenden Qualität bzw. eines

- 2 -

gleichmässigen Geschmackseindruckes nur schlecht möglich. Derartige Herstellungstechniken sind beispielsweise in Snack Food 50 (4) 46-49, 1970, beschrieben.

Es ist auch die Herstellung von sogenannten Fleisch-Chips beschrieben worden (Pakistan Journal of Agricultural Sciences 13 (1) 113-116 [1976]), bei dem getrocknete Rindfleischscheiben auf einen Restwassergehalt von 2 bis 3 % gefriergetrocknet und anschliessend gebraten werden. Die hierbei angewandte Methode ist aufwendig und die resultierenden Produkte weisen keine befriedigenden reinen Fleischgeschmacksnoten auf.

Schliesslich ist die Herstellung von getrockneten Rindfleischscheiben durch Einfüllen von Rindfleischstücken zusammen mit Würzen in Därme, Garung des Rindfleisches in den Därmen und Trocknung des Fleisches durch Eintauchen in wässrige Salzlösungen bei höheren Temperaturen in der US-PS 4 053 649 beschrieben worden. Die nach diesem Verfahren zugänglichen getrockneten Fleischprodukte weisen ebenfalls keine optimalen Geschmackseigenschaften auf, was zum Teil auf die Auslaugung in wässriger Salzlösung bei höherer Temperatur zurückgeführt werden kann. In der US-PS 3 497 361 ist ebenfalls u.a. die Herstellung eines solchen getrockneten Rindfleischproduktes beschrieben worden, bei dem die Garung bei höheren Temperaturen während Zeiträumen von mehreren Tagen durchgeführt wird. Durch die Einstellung einer niedrigen relativen Luftfeuchte während der lang andauernden Garung in der Hitze ergeben sich starke Schrumpfungserscheinungen und auch die Ausbildung optimaler Geschmacksnoten ist nicht möglich.

Trotz der vielfältigen Angebotes an Fleischprodukten besteht eine ständige Nachfrage nach solchen Waren, die in ihrem optischen Erscheinungsbild und ihrem Geschmack hohen Anforderungen genügen und zu einer Bereicherung der verfügbaren Warenpalette beitragen. Darüber hinaus wird häufig nach im Nährwert hochstehenden Lebensmitteln mit geringem Fettanteil verlangt. Schliesslich besteht im Zuge der zunehmenden Reisetätigkeit auch eine wachsende Nachfrage nach Fleischprodukten, die in·Geschmack, Erscheinungsbild und Nährwert auf die Bedürfnisse der Menschen unterwegs abgestellt sind.

Der Erfindung liegt die Aufgabe zugrunde, ein neuartiges Nahrungsmittel auf Basis von Fleisch und Verfahren zu deren Herstellung zu schaffen, das den vorstehend angeführten Bedürfnissen gerecht wird. Insbesondere soll es sich hierbei um ein qualitativ hochwertiges Lebensmittel mit hohem Nährwert mit beliebig gering wählbarem Fettanteil, einschliesslich weitgehend fettgewebefreier Produkte handeln, deren optisches Erscheinungsbild ansprechend ist. Trotz der Herstellbarkeit des Produktes aus Fleischteilen, gegebenenfalls unterschiedlicher Provenienz und Grösse, soll das Produkt sich dem Erscheinungsbild natürlich gewachsenen Fleisches, insbesondere eines rohbelassenen, getrockneten und gereiften Fleisches, möglichst vollkommen annähern bzw. diesem gleichkommen. Auch soll das Produkt vorzugsweise eine reine Fleischaromanote unter Vermeidung von typischen Geschmacksnoten von in Fett gebratenem Fleisch aufweisen.

Diese Aufgabe wird durch die Bereitstellung eines getrockneten Nahrungsmittels aus gestückeltem, gewürztem Fleisch der eingangs genannten Art gelöst, das dadurch gekennzeichnet ist, dass es aus stückigen Fleischteilen einer Grösse von 5 bis 25 mm gebildet ist, die einen festen Verbund bilden, der eine plattenartige Form aufweist, die Höhe des Verbundes zwischen 20 und 80 mm, die Breite bei 80 bis 150 mm liegt, und das Fleisch einen Fettanteil geringer als 20 %, einen Wassergehalt zwischen 30 und 50 % aufweist und das Aussehen gewachsenen, rohen, getrockneten Fleisches besitzt.

- 4 -

In dem erfindungsgemässen Fleischprodukt kann Fleisch unterschiedlichster Herkunft, wie z.B. Rindfleisch, Kalbfleisch, Schweinefleisch oder Fleisch von Geflügel, gegebenenfalls sogar Fisch, wie auch Kombinationen hiervon eingesetzt werden. Derzeit ist die Verwendung eines zumindest hohen Anteils an schierem Rindfleisch bevorzugt.

Das erfindungsgemässe Fleischprodukt ist in charakteristischer Weise, ausgehend von gestückeltem Fleisch, erhältlich. Nach einer Ausführungsform ist es aus einem grösseren Anteil Fleisch in etwa taubenei- bis hühnereigrosser Stückelung und einem kleineren Anteil Fleisch mit geringerer Partikelgrösse zusammengesetzt. Begünstigt durch den hohen Anteil von Fleisch, beispielsweise im Bereich von 60 bis 90%, mit grösserer, aber auch bei kleinerer Stückelung, kann das Endprodukt das typische Aussehen natürlich gewachsenen Fleisches annehmen, wobei dieser Eindruck durch die Verwendung eines einheitlichen Fleischtypus, beispielsweise lediglich Fleisch vom Rind oder lediglich Fleisch vom Schwein, etc., verstärkt wird. Die grösseren bzw. gröberen Fleischstücke werden durch den in geringen Teilchengrössen vorliegenden Fleischanteil nach entsprechender Vermengung gut gebunden. Aus diesem Grunde ist es vorteilhaft, einen kleineren Anteil an Fleisch in sogenanntes "bindiges Brät" unter Verwendung üblicher Zerkleinerungsvorrichtungen überzuführen. In diesem "bindigen Brät" liegt die Fleischmasse in Fein- bzw. Feinstzerkleinerung vor, wobei deren Fettanteil, sofern ein solcher merklich vorhanden ist, emulgiert sein kann. Als Vorrichtungen können beispielsweise Wölfe, Kutter bzw. Durchlaufkutter, gegebenenfalls mit Vakuumanwendung, herangezogen werden, mit denen Zerkleinerungs-, Vermischungs- und Dispergiergrade im kolloidalen Bereich erzielbar sind. Bei der Fein- bzw. Feinstzerkleinerung des "bindigen Brätes" aus Fleisch kann gleichzeitig Eis und

- 5 -

Salz zugeführt werden. Durch die Eiszufügung wird die bei
der Zerkleinerung auftretende Reibungswärme ohne lokale
Überhitzung abgeführt.

Wenngleich das erfindungsgemässe Fleischprodukt nach einer
Ausführungsform aus einem höheren Anteil grobstückigerem
Fleisch mit einem geringeren Anteil von Fleisch in feinzerteilter Form (sogenanntes "bindiges Brät") zusammengesetzt
sein kann, ist es ebenfalls möglich, das Fleischprodukt
ausschliesslich aus grobstückigerem Fleisch zu erzeugen. In
einem solchen Fall kann die Haftung der grobstückigeren
Fleischteile aneinander durch andere Massnahmen verbessert
werden, wobei beispielsweise das Fleisch in sogenannten
Tumbel- bzw. Massiergeräten eine Oberflächenklebrigkeit erreichen kann, die die Zusammenfügung begünstigt.

Eine bevorzugte Ausführungsform der Erfindung ist auf die
teilweise bis ausschliessliche Verwendung von Fleischstücken
einer durchschnittlichen Teilchengrösse von 8 bis 20 mm
gerichtet, wobei besonders günstige Ergebnisse im Bereich
von 10 bis 15 mm erzielbar sind. Überraschenderweise ergibt
sich auch beim Einsatz solcher relativ geringer Teilchengrössen der Eindruck natürlich gewachsenen Fleisches.
Durch die Verfestigung während des Garens und den Wasseraustritt während der Trocknung bzw. Reifung werden bei den
geschilderten gröberen bzw. feineren Ausgangsfleischgrössen
im Endprodukt Grössen bzw. Durchmesser im Bereich von 5 bis
25 mm, die einen festen Verbund bilden, möglich.

Das Verfahren gemäss der Erfindung umfasst die folgenden
Verfahrensschritte: Zerstückeln von rohem Fleisch mit niedrigem Fettanteil, Ausformung des gestückelten Fleisches zu
einem plattenförmigen Block, Garen und Reifung bzw. der
Trocknung des Blocks, wobei diese Verfahrensmassnahmen derart durchgeführt werden, dass der verfestigte, gereifte Block eine Breite von 80 bis 150 mm, eine Höhe von 20 bis 80 mm, einen Fettanteil des Fleisches von geringer als 20%, einen Wassergehalt zwischen 30 und 50 Gew.-% und das Aussehen gewachsenen, rohen, getrockneten Fleisches besitzt, wonach der Block gegebenenfalls zu dünnen Scheiben geschnitten wird.

Nachdem von Fleischstücken unterschiedlicher Grösse bzw. Fleischstücken gleicher Grösse ausgegangen wird, werden diese zu einer dichten Masse vermischt bzw. vermengt. Geräte, in denen diese Vermischung durchgeführt werden kann, sind bekannt. Mit Vorteil wird die Vermengung der Fleischstücke in einem Vakuummischer durchgeführt, da hierdurch besonders dichte, weitgehend luft- und porenfreie Mischungen zugängig sind.

Diese Masse wird zur Herstellung des erfindungsgemässen Fleischproduktes bündig in eine Form eingedrückt. In dem Falle, wo bei der vorhergehenden Vermischung diese unter Vakuum bzw. Teilvakuum durchgeführt worden ist, wird vorteilhaft auch die Einfüllung des Fleischgemenges in die Form unter Vakuum vollzogen. Wenngleich die Geometrie und die Eigenschaften der Form in gewissem Rahmen variieren können, sollte diese vorzugsweise den Beanspruchungen eines Erhitzungsvorganges, gegebenenfalls unter Vakuum, standhalten. Es ist ausreichend, wenn die Form, die vorzugsweise eine Metallform darstellt, in einer Dimenion nur eine relativ geringe Ausdehnung besitzt, bzw. die Einführung und Eindrückung des Fleischgemenges in die Form nur bis zu einer relativ niedrigen Höhe erfolgt. So ist es bevorzugt, dass die Höhe des eingedrückten Fleisches derart ist, dass das gegarte und nach Herausnahme anschliessend getrocknete Produkt eine Höhe von ca. 80 mm und bevorzugt 50 mm nicht
übersteigt. Allerdings ist es von Bedeutung, dass die Füllhöhe derart ist, dass das verzehrbare Endprodukt gegebenenfalls nach Schnitt in dünne Scheiben, eine Mindesthöhe
von 20 mm, bevorzugt zwischen 35 und 55 mm, besitzt. Durch
die so gewählte Füllhöhe wird der nach der Garung folgende
Trocknungs- und Reifungsvorgang erleichtert, da dann der
Transport des auszutreibenden Wassers in homogener Weise
etc. erfolgen kann. Auch können sich in dem so geformten
Produkt besonders günstige Aromanoten bei Garung und Reifung ausbilden.

Auch soll besonders günstig die dritte Dimension der Form
oder der Extrudiervorgang, wenn die Form einen Extruder
bzw. eine Extrudertülle darstellt, so gewählt bzw. gesteuert werden, dass das verzehrbare Produkt (vor dem Schnitt
in dünne Scheiben) mindestens eine Tiefe von 50 mm besitzt.

Nach einer bevorzugten Ausführungsform der Erfindung können
die vermengten Fleischstücke in einem Kunststoffschlauch
in die Form eingebracht und in dem Schlauch an den Formwandungen angedrückt werden, wobei das Fleisch bereits in den
Kunststoffschlauch bzw. die Folie unter Vakuum eingesiegelt und in die Form abgefüllt sein · kann.

Alternativ kann das Fleischgemenge auch in die Form bei
Normaldruck eingefüllt und die eingeschlossene und "anhängige" Luft durch eine geeignete Massnahme zumindest teilweise vertrieben werden. Es ist nämlich eine charakteristische Eigenschaft des erfindungsgemässen Produktes, dass
hierin im wesentlichen keine Luftblasen eingeschlossen
sind, was durch mechanischen Druck, z.B. einen geeigneten
Extruder, andererseits aber auch gegebenenfalls durch Anlegen eines Vakuums beim Mischen wie Garen bzw. Kombinationen beider Massnahmen erreicht werden kann. Anstelle der Verwendung der eingesetzten Kunststofffolie, die auch die Herausnahme des Fleischproduktes aus der Form erleichtert, ist es in alternativer Weise auch möglich, das Fleischprodukt direkt in die Form einzubringen, und z.B. durch einen bewegbaren Deckel, die in dem Produkt eingeschlossene Luft durch Druck aus geeigneten Öffnungen der Form auszupressen.

Der Einsatz einer Extruderpresse ist erfindungsgemäss besonders bevorzugt, wobei die Extrudertülle so gewählt sein soll, dass die austretende extrudierte Platte bzw. -strang erheblich über den Dimensionen liegt, die für das Endprodukt angegeben wurden. Einerseits ist es erfindungsgemäss als günstig ermittelt worden, wenn die Garung und Reifung in "Blockform" erfolgen können, andererseits muss bei diesen Stufen aber mit einer Volumenverringerung gerechnet werden.

Durch die Ausführung der Luft beim Extrudieren und/oder Garen wird erreicht, dass nicht nur im Produkt Poren und Zwischenräume vermieden sind, sondern auch, dass die Oberfläche - dann wenn die Oberfläche der Form glatt ist - des Produktes ebenfalls in glatter Weise wiedergegeben wird. Durch das Anlegen eines Vakuums bzw. Teilvakuums ist es auch möglich, die Oberfläche der Folie oder die Oberfläche der Form spiegelbildlich auf der Fleischproduktaussenseite auszubilden. Dies kann beispielsweise zur Ausbildung einer reliefartigen Struktur, die natürlicher Fleischoberfläche ähnelt, ausgenützt werden. Schliesslich wirkt sich während des Garungsvorganges auch günstig aus, dass der Fleischsaft am Austritt aus dem Produkt gehindert wird, was zur Ausbildung günstiger Aromanoten beiträgt.

Das Garen wird besonders zweckmässig ohne wesentlichen Fett- oder Ölzusatz durchgeführt, um oberflächliche Brateffekte des Fettes zu vermeiden. Das Garen kann somit in einer Form oder einer Extrudertülle oder auf einem bzw. zwischen Gittern erfolgen. Wesentlich ist aber, dass das Garen in "Blockform" im wesentlichen ohne Austritt von Fleischsaft und gegebenenfalls unter Vermeidung von Bratwirkungen vorgenommen wird.

Als Kunststoffschlauch in der Form oder zur Führung nach dem Extruder kann beispielsweise ein endloser Folienschlauch dienen, der portionsweise oder kontinuierlich eingesetzt wird. Hierbei ist auf einen Austritt von Luftblasen geachtet.

Bis zu diesem Zeitpunkt kann bereits eine Würzung und Aromatisierung des Fleischproduktes erfolgt sein, beispielsweise durch Pökelung, Würzung, etc., der verwendeten Fleischstücke. Infrage kommende Gewürze sind dem Fachmann bekannt und nur beispielhaft soll auf die Verwendung von Pfeffer, Muskat, Saccharose, Ascorbinsäure bzw. sonstige organische Genussäuren, verwiesen werden. Auch ist es möglich, das verwendete Fleisch vor der Zerkleinerung für einen längeren Zeitraum zu pökeln, beispielsweise Rindfleisch im Verlaufe von 2 bis 3 Tagen im Bereich niedriger Temperaturen, z.B. bei +4° bis +6°C.

Das in die Form eingefüllte, vorzugsweise glatt eingestrichene Fleischprodukt kann hierin, besonders vorteilhaft im Teilvakuum, einer schonenden Garung unterzogen werden. Hierbei wird das Fleischprodukt üblicherweise, je nach Art des herangezogenen Fleisches, dessen "Vorgeschichte" und der geometrischen Ausbildung der Form im allgemeinen höheren Temperaturen im Bereich von 50 bis 80°C im Verlauf einiger Stunden ausgesetzt. Es ist günstig, wenn die Temperatur des Kerns des Fleischproduktes etwa 80°C nicht übersteigt, wobei Temperaturen im Kern von etwa 60 bis 70°C bevorzugt sind. Durch die Anwendung höherer Temperaturen als die hier angegebenen und über längere Zeiträume wird die Ausbildung von Hocherhitzungs-Geschmacksnoten begünstigt, die weniger bevorzugt ist. Auch ist es schwieriger, das gewünschte Aroma und den gewünschten kräftig-elastischen Biss dann zu erreichen.

Sofern beim Garen ein Vakuum angewandt wird, kann dieses im breiten Bereich schwanken. Besonders günstige Ergebnisse wurden bei Unterdrücken von etwa 5 bis 25 Torr erzielt. Es kann jedoch auch bei geringerem Untertruck, z.B. im Bereich von 80 bis 150 Torr, gegart werden, wobei sich dann die Garzeiten etwas erhöhen können. Der durch das Garen im Vakuum erzielte Vorteil liegt u.a. darin, dass hierbei der Austritt von Fleischsaft verringert und dadurch die Ausbildung optimaler Aromanoten begünstigt wird. Auch wird durch eine Vakuumanlegung der Austritt von im Produkt eingeschlossenen Luftblasen sichergestellt, die selbst durch eine Vakuummischung bzw. Vakuumeinfüllung in die Form allein häufig nicht mit Sicherheit austreibbar sind. Durch die Vakuumgarung wird schliesslich eine besonders schonende Behandlung möglich.

Das aus der Form und aus der Kunststoffolie, sofern eine solche verwendet wurde, ausgelöste Produkt wird dann während längerer Zeit. z.B. in einem üblichen Reiferaum, einer schonenden Trocknung und Reifung unterworfen. Insbesondere ist die Trocknung mit heisser, trockener Luft ungünstig, die der Ausbildung der gewünschten Fleischaromen entgegenwirkt. Bei dem erfindungsgemässn Verfahren wird der Wassergehalt des Fleisches bzw.

Fleischanteils unter etwa 50 Gew.-%, bezogen auf das Gewicht des Endproduktes, wobei ein Bereich von etwa 45 bis 35 Gew.-% besonders bevorzugt ist, bezogen auf das Endprodukt, gebracht. Zu diesem Zweck kann das Fleischprodukt, das durch den Garungsvorgang gegebenenfalls begünstigt durch eine Vakuumanlegung, eine Verfestigung erfahren hat, in Gestellen aufgestellt und gegebenenfalls aufgehängt werden. Die Trocknung des Produktes erfolgt vorteilhaft bei ca. 5 bis 25°C, bevorzugt bei 5 bis 15°C, und einer relativen Feuchte von 50 bis 80 %. Insbesondere haben sich Reifungs- bzw. Trocknungsbedingungen bei einer relativen Feuchte von 65 bis 78% als besonders günstig erwiesen. Für die Trocknung, die im Anschluss an das Garen vorgesehen ist, wird das Produkt derart angeordnet, dass der Wasseraustritt nicht behindert ist. Die Trocknung kann bei etwa Atmosphärendruck erfolgen. Es ist auch möglich, während der Trocknung des Produktes dieses zusätzlich im Hinblick auf eine Aromabeibringung zu behandeln. Zu diesem Zweck kann beispielsweise während und/oder nach der Reifung eine Räucherung durchgeführt werden.

Das erfindungsgemässe Nahrungsmittel kann innerhalb der angeführten Dimensionierung in nahezu beliebiger Form hergestellt werden. Im Gegensatz zur Herstellung von Bündner-Fleisch ist beispielsweise die Breite des erfindungsgemässen Produktes nicht durch die natürliche Muskelbreite festgelegt, sondern kann sofern dies wünschenswert ist, in beliebiger Weise vergrössert werden. Nach einer bevorzugten Ausbildungsform des erfindungsgemässen Fleischproduktes wird dieses jedoch in einer im wesentlichen plattenartigen Form einer Höhe von 20 bis 80, bevorzugt 35 bis 55 mm, bzw. in einer Rundform bzw. ellipsoiden Form entsprechenden Durchmessers erzeugt. Durch die Ausbildung einer solchen Höhe des Produktes sowie den Garvorgang wird die nachfolgende Trocknung besonders begünstigt.

Durch eine Plattenform, bzw. im wesentlichen rechteckige Form des erfindungsgemässen Nahrungsmittels, die
durch die Verwendung einer entsprechenden Garform und die
Vornahme des Garens vorteilhaft unter Vakuum bzw. unter
Auspressung von anhaftender Luft erreicht wird, kann
nicht nur der Schnitt des erfindungsgemässen Fleischproduktes, sondern auch die diesem vorhergehende Lagerung
(wie auch Trocknung) erleichtert sein.

Der Fettgehalte des erfindungsgemässen Produktes beträgt
vorteilhaft 20 bis 10 Gew.-% oder weniger. Das Produkt
zeichnet sich gleichzeitig durch einen hohen Anteil an
Eiweiss aus, der im Bereich von etwa 30 bis 50 Gew.-%
liegen kann.

Das erfindungsgemässe Fleischprodukt kann nach einer bevorzugten Ausführungsform auch zusätzlich Anteile anderer
Nahrungsmittel bzw. Nahrungsmittelzusätze enthalten, die in
geeigneter Form häufig vor dem Garen zugefügt werden. So ist
es beispielsweise möglich, Anteile von Cerealien, Brot oder
Backwaren in das Produkt einzuarbeiten. Hierdurch wird ein
besonders ausgewogenes Nahrungsmittel zur Verfügung gestellt. Auch ist es möglich, z.B. Fleisch oder Früchte
in getrockneter Form oder z.B. Speck in das Produkt mit
einzuarbeiten. Durch die beim erfindungsgemässen Produkt
mögliche Einbringung anderer Anteile von Lebensmitteln,
deren Spektrum sehr vielseitig sein kann, können neuartige Nahrungsmittel mit verschiedenartigster Geschmackskomponente gebildet werden, die ein optisch harmonisches Erscheinungsbild aufweisen können. Beispielsweise kann der
Gewichtsanteil derartiger Zusätze im Bereich von 10 bis
80 Gew.-% schwanken.

Das erfindungsgemässe Fleischprodukt kann weitgehend frei von Fettgewebe erzeugt werden und stellt dann ein besonders hochwertiges Nahrungsmittel dar. In dünn geschnittener Form (in diesem Fall wird man von einem im wesentlichen langgestreckten, plattenförmigen Produkt niedriger Höhe ausgehen), kann es in geeigneter Verpackung als Reiseproviant, Brotauflage, etc. sehr gut dienen.

Es stellt einen Vorteil des erfindungsgemässen Produktes dar, dass dieses in Abhängigkeit von der Form, in der die Garung durchgeführt wird, in nahezu beliebiger Formgebung innerhalb der angegebenen Dimensionierung erzeugt werden kann, wobei das Aussehen eines natürlich gewachsenen Produktes, das häufig den Eindruck rohgetrockneten Fleisches erweckt, gewahrt bleibt. Daher kann das erfindungsgemässe Produkt beispielsweise auch in Form eines ausgelösten Koteletts, in Form von Braten oder von Bauernbrot, etc., vorliegen.

Die Herstellung des erfindungsgemässen Fleischproduktes wird nachstehend in einem Ausführungsbeispiel erläutert, das lediglich zur Veranschaulichung dient.

Ausführungsbeispiel

800 kg Rindfleisch der Qualitätsstufe I (schieres Fleisch, von anhaftendem Fett- und Sehnengewebe befreit) werden in faustgrossen Stücken, wie aus der Zerlegung kommend, mit Nitrit-Pökelsalz bzw. Kochsalz, Zucker, Pfeffer (ca. 2,5 % Nitrit-Pökelsalz bzw. Kochsalz, 0,5 % Zucker, geringe Pfefferanteile, bezogen auf das Gewicht an Rindfleisch) in einem üblichen Menger vermischt und zu etwa taubeneigrossen Stücken grob gewolft. Anschliessend wird das Rindfleisch während 28 bis 72 h bei +4° bis +6°C gepökelt.

140 kg Rindfleisch der Qualitätsstufe III werden unter
Zugabe von Eis und etwa 2,5 % Salz (bezogen auf das Gewicht
an Rindfleisch III plus Eis) in einem üblichen Kutter zu
einem bindigen Brät fein zerkleinert. Die erhaltenen Anteile von Rindfleisch I und Rindfleisch III werden in
einem üblichen Vakuummenger zu einer bindigen Masse bei
10 bis 15°C während 5 bis 8 Minuten zu einer dichten Masse
vermischt. Hiernach wird das vermischte Produkt unter Vakuum in einen Extruder gefüllt und die blasenfreie Masse
zu einem rechteckigen Block einer Dimensionierung von
500 x 180 x 50mm ausgepresst. Dieser Block wird sodann :
auf einem Gitter liegend,        gegebenenfalls eingesiegelt
in Kunststoff, langsam mittels einer Garkammer in mit Feuchtigkeit gesättigter Atmosphäre stufenweise über 50, 60, 70
und 80°C Aussentemperatur erhitzt. Die Gesamtdauer des Garungsvorganges beträgt etwa 5 bis 6 h. Hiernach wird das abgekühlte Produkt vom Gitter genommen bzw. das verfestigte
Produkt ausgepackt. Dieses wird dann in ein Kunststoffnetz
eingegeben und in einem Klimaraum während 4 Wochen
bei ca. 15°C bei einer Luftfeuchtigkeit (relative Feuchte)
von 70 bis 80 % gereift. Hierbei wird eine Trocknung auf
einen Restwassergehalt von ca. 40 %, bezogen auf das Endprodukt, erzielt. In der Endphase des Reifungsvorganges
wird während ca. 2 Tagen Rauch in die Klimakammer eingeführt.
Das Produkt ist nun unmittelbar zum Verzehr fertig, wobei
gegebenenfalls - je nach Geschmacksrichtung - eine oberflächliche Nachwürzung in an sich bekannter Weise vorgenommen werden kann.

- 15 -

Patentansprüche

1. Getrocknetes Nahrungsmittel auf Fleischbasis, insbesondere aus Rindfleisch, erhältlich durch Zerkleinern von rohem Fleisch, Ausformung des Fleisches, Garen und Trocknen, dadurch g e k e n n z e i c h n e t , dass es
   (a) aus stückigen Fleischteilen einer Grösse von 5 bis 25 mm gebildet ist,
   (b) die einen festen Verbund bilden,
   (c) der eine plattenartige Form aufweist,
   (d) die Höhe des Verbundes zwischen 20 und 80 mm, die
   (e) Breite bei 80 bis 150 mm liegt, und
   (f) das Fleisch einen Fettanteil geringer als 20 %, einen Wassergehalt zwischen 30 und 50 % aufweist und das Aussehen rohbelassenen, getrockneten Fleisches besitzt.

2. Getrocknetes Nahrungsmittel nach Anspruch 1, dadurch g e k e n n z e i c h n e t , dass es eine im wesentlichen rechteckige Blockform besitzt.

3. Getrocknetes Nahrungsmittel nach Anspruch 1 oder 2, dadurch g e k e n n z e i c h n e t , dass die Höhe des Verbundes 35 bis 55 mm beträgt.

4. Getrocknetes Nahrungsmittel nach einem oder mehreren der Ansprüche 1 bis 3, dadurch g e k e n n z e i c h - n e t , dass es einen extrudierten Strang oder einen aus der Form ausgelösten Block darstellt, in den gegebenenfalls von Fleisch verschiedene Lebensmittel, wie Cerealien oder Trockenfrüchte eingearbeitet sind.

5. Getrocknetes Nahrungsmittel nach einem oder mehreren der Ansprüche 1 bis 3, dadurch g e k e n n z e i c h - n e t , dass es in Form einer geschnittenen Scheibe einer Stärke von 0,5 bis 5 mm vorliegt.

6. Getrocknetes Nahrungsmittel nach einem oder mehreren der Ansprüche 1 bis 5, dadurch g e k e n n z e i c h - n e t , dass es in Form des extrudierten Stranges oder Blockes gegart und gegebenenfalls gereift ist.

7. Getrocknetes Nahrungsmittel nach einem oder mehreren der vorangehenden Ansprüche, dadurch g e k e n n - z e i c h n e t , dass die stückigen Fleischteile eine Grösse von 8 bis 20 mm aufweisen.

8. Getrocknetes Nahrungsmittel nach einem oder mehreren der vorangehenden Ansprüche, dadurch g e k e n n - z e i c h n e t , dass es porenfrei ist.

9. Getrocknetes Nahrungsmittel nach einem oder mehreren der vorangehenden Ansprüche, dadurch g e k e n n - z e i c h n e t , dass die Schnittfläche von äusserlich wahrnehmbaren Würzüberzügen frei ist.

10. Verfahren zur Herstellung des Produktes nach Anspruch 1, durch die folgenden Verfahrensschritte:
    (a) Zerstückeln von rohem Fleisch mit niedrigem Fettanteil,
    (b) Ausformung des gestückelten Fleisches zu einem plattenförmigen Block,
    (c) Garen und
    (d) Reifung bzw. der Trocknung des Blocks, wobei diese Verfahrensmassnahmen derart durchgeführt werden, dass der verfestigte gereifte Block eine Breite von 80 bis 150 mm, eine Höhe von 20 bis 80 mm, einen Fettanteil des Fleisches von geringer als 20 %, einen Wassergehalt zwischen 30 und 50 Gew.-% und das Aussehen gewachsenen, rohen, getrockneten Fleisches besitzt, wonach der Block gegebenenfalls zu dünnen Scheiben geschnitten wird.

11. Verfahren nach Anspruch 10, dadurch g e k e n n - z e i c h n e t , dass die Ausformung zu dem plattenförmigen Block in einer Form oder durch einen Extruder vorgenommen wird.

12. Verfahren nach den Ansprüchen 10 oder 11, dadurch g e - k e n n z e i c h n e t , dass man die Garung derart durchführt, dass die Temperatur im Kern des Fleischproduktes etwa 80°C nicht übersteigt, wobei der Fleischsaft während des Garens am Austritt gehindert ist.

13. Verfahren nach Anspruch 10, 11 oder 12, dadurch g e - k e n n z e i c h n e t , dass die Garung der vermengten Fleischstücke in einem Kunststoffbeutel oder Naturdarm, der in der Form eingedrückt ist oder auf einem Gitter erfolgt.

14. Verfahren nach einem oder mehreren der Ansprüche 10 bis 13, dadurch g e k e n n z e i c h n e t , dass man die Trocknung im Anschluss an die Garung schonend, in feuchter Luft, gegebenenfalls im Vakuum durchführt.

15. Verfahren nach einem oder mehreren der Ansprüche 10 bis 14, dadurch g e k e n n z e i c h n e t , dass man die Trocknung des Produktes bei ca. 5 bis 25°C bei einer relativen Feuchte von ca. 50 bis 80 % durchführt.

16. Verfahren nach einem oder mehreren der Ansprüche 10 bis 15, dadruch g e k e n n z e i c h n e t , dass man die Trocknung während längerer Zeit in einem üblichen Reiferaum, · gegebenenfalls unter gleichzeitiger Räucherung durchführt.

17. Verfahren nach einem oder mehreren der Ansprüche 10 bis 16, dadurch g e k e n n z e i c h n e t , dass man die Trocknung auf einen Restwassergehalt von 35 bis 45 % durchführt.

18. Verfahren nach einem oder mehreren der vorangehenden Ansprüche, dadurch g e k e n n z e i c h n e t , dass der plattenförmige Block vor dem Schneiden eine Tiefe von mindestens 50 mm besitzt.

19. Verfahren nach einem oder mehreren der Ansprüche 10 bis 18, dadurch g e k e n n z e i c h n e t , dass das Garen im wesentlichen ohne Fettzusatz zur Vermeidung typisch bratenartiger Aromanoten durchgeführt wird.

**Europäisches Patentamt**

## EUROPÄISCHER RECHERCHENBERICHT

EP 80 10 7822.1

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| D | <u>US - A - 3 497 361</u> (ARMOUR INDUSTRIAL CHEMICAL CO.)<br><br>* ganzes Dokument *<br><br>-- | | A 23 L 1/31<br><br>A 23 L 1/315<br><br>A 23 B 4/04 |
| A | <u>DE - A1 - 2 822 658</u> (BEATRICE FOODS CO.)<br><br>* ganzes Dokument *<br><br>-- | | |
| A,P | <u>DE - A1 - 2 939 407</u> (V.M. LEWIS et al.)<br><br>* ganzes Dokument * | | |
| P | & FR - A1 - 2 437 791<br><br>---- | | |

**RECHERCHIERTE SACHGEBIETE (Int. Cl.³)**

A 23 B 4/00

A 23 L 1/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 02-03-1981 | SCHULTZE |

EPA form 1503.1 06.78